# EUROPEAN PATENT APPLICATION

(11) **EP 4 472 098 A1**
(43) Date of publication of application: **04.12.2024**
(21) Application number: 24178983.3
(22) Date of filing: 30.05.2024
(51) Int. Cl.: H04B 7/06

(54) **METHOD FOR OPTIMIZING THE BEAM DIRECTIONS AND PERIODICITY OF SYNCHRONIZATION SIGNAL BLOCK (SSB) TRANSMISSION**

(30) Priority: 01.06.2023 IN 202321037822; 24.05.2024 US 202418673534
(71) Applicant: Mavenir Systems, Inc., Richardson, TX 75081 (US)
(72) Inventor: Chatterjee, Shubhajeet, Richardson, 75081 (US); Yang, Roy, Buffalo Grove, 60089 (US); Vijayan, Logeshawaran, 560066 Bengaluru (IN)
(74) Representative: Studio Torta S.p.A.

(57) **Abstract**

A method for optimizing Synchronization Signal Block (SSB) sweep by a gNodeB in a 5G wireless system includes: sweeping, by a gNB, SSBs and collecting a user equipment (UE)-specific beam direction history; determining, by at least one of an artificial intelligence (Al) and machine learning (ML) engine, an optimal number of SSB beams and optimal set of beam directions based on the UE-specific beam direction history, and a complementary set of beam directions for the optimal set of beam directions; transmitting, by the at least one of the AI and ML engine, both the optimal set and the complementary set of SSB beam directions to the gNB; and transmitting, by the gNB, i) at every *t*₁ milliseconds (ms), SSBs in the optimal beam directions, and ii) at every *t*₂ ms, SSBs in the optimal directions as well as the complementary directions, wherein *t*₂ > *t*₁ and *t*₁, *t*₂ ∈ {5, 10, 20, 40, 80, 160} *ms.*

## Description

### BACKGROUND

### 1. Field of the Invention

The invention is directed to the field of Radio Access Network (RAN) configuration for Stand-Alone (SA) and Non-Stand-Alone (Non-SA) 5G-based mobile networks, and relates more particularly to Synchronization Signal Blocks (SSBs) sweeping solutions.

### 2. Description of Related Art

In the existing 5G networks (SA/NSA), gNodeBs (gNBs) sweep Synchronization Signal Blocks (SSBs) amongst a set of statically/manually configured beam directions with statically/manually configured periodicity. The SSBs are used at User Equipments (UEs) to make the necessary decisions during Initial Attachment (IA), Synchronization, Radio Link Failure (RLF) announcements etc.

As per 3^{rd} Generation Partnership Project (3GPP), the maximum limit of the SSB beam sweeping directions (Lmax) is: 4 when Center Carrier (CC) frequency is below 3 GHz; 8 when CC is between 3 GHz to 6 GHz; and 64 when CC is higher than 6 GHz. An entire sweep of SSB is called SSB burst set. The periodicity of SSB burst set can be selected from the set of {5ms,10ms, 20ms, 40ms, 80ms, and 160ms}. An SSB is 4 OFDM symbol long. Each OFDM symbol is spread through 240 subcarriers.

The SSB bursts utilize a large amount of network resources. Therefore, statically designed beam directions and periodicity aiming to accommodate the worst case scenario which may arise only for a small window of time can impact the following:
a) Increased overhead i.e., degraded utilization of time-frequency resources affecting spectral efficiency (SE).
b) Increased interferences among the cells.
c) Increased power consumptions in both network and UEs leading to increased network CAPEX and reduced UE battery life, respectively.

The current conventional SSB sweeping solution is to use a fixed number of SSBs per cell, which SSB beams point to a set of fixed directions with a uniform periodicity. This solution can be sub-optimal for the following reasons:
a) User distribution in each SSB beam has a high likelihood of being uneven. For example, SSB beam 1 that points to the lake will have much fewer UEs than SSB beam 2 that points to the highway. Accordingly, network energy may be wasted on SSB beam1 (e.g., due to sparsity of the UEs in that direction) if it has the same sweeping periodicity as SSB beam 2.
b) The UEs at the edge of the fixed-direction SSB beam (i.e., in-between 2 adjacent SSB beams) will experience lower Reference Signal Received Power (RSRP), and therefore lower throughput. Since UE distribution in the cell is dynamic, one or more UE clusters may form at different locations inside the cell at different time of the day. When a UE cluster is located at the edge of the fixed-direction SSB, the performance of all UEs inside that cluster suffers.

In summary, in the existing 5G networks, the SSB directions and periodicity are set statically/manually at the deployment time, and this static configuration aims to accommodate the worst-case scenario of the network topology. However, this static configuration to accommodate the worst case scenario results in multiple inefficiencies (e.g., cost, interference and power consumption).

Accordingly, there is a need for a system and a method for a more efficient SSB sweeping solution addressing the above-mentioned issues.

### SUMMARY

Accordingly, it is desired to provide a system and method for a more efficient SSB sweeping solution in the field of 5G-based mobile networks.

According to an example embodiment, the SSB beam direction is adjusted to the center of the UE cluster such that more UEs can have better coverage.

According to an example embodiment, the following are performed based on the distribution of UE locations and channel conditions: i) determine the minimum number of SSB beams required; ii) determine the optimal directions of the SSB beams; and iii) set the optimal periodicity of the SSB bursts. In this manner, the network throughput is maximized and the energy consumption is minimized.

According to an example embodiment, an artificial intelligence (AI) and/or machine learning (ML)-based method is proposed to determine the SSB beam directions based on the UE-specific beam direction history.

An example embodiment of the method includes three steps: Data-Collection, Training/Optimization and Deployment. In the Data-Collection step, gNBs sweep SSBs exhaustively and collect the UE-specific beam direction history. After the Data-Collection is completed, an AI/ML engine running at a centralized controller (e.g., RAN Intelligent Controller) determines the optimal number of SSB beams and their directions based on the UE-specific beam direction history by performing *K-means Clustering* per gNB basis. In addition to the optimal set of beam directions, a complementary set of the optimal set is also computed to handle the lower probability occurrences in the statistical models e.g., UEs appearing in a completely new direction that has not been considered in the training data. Both of the optimal set and the complementary set are shared with the gNBs. At every *t*₁ ms, the gNBs transmit SSBs in the optimal beam directions. At every *t*₂ ms, the gNBs transmit SSBs in the optimal directions as well as the complementary directions. Here, *t*₂ > *t*₁ and *t*₁, *t*₂ ∈ {5, 10, 20, 40, 80, 160} *ms.*

According to an example embodiment, gNBs keep collecting UE-specific beam directions from the network and provide them to the AI/ML engine. The AI/ML engine updates the SSB configurations (direction and periodicity) periodically based on the weighted average of the recent data and the previous data.

### BRIEF DESCRIPTION OF THE DRAWINGS

FIG. 1 shows a comparison between the baseline (conventional method) and the proposed inventive method.
FIG. 2 shows an example of bitmaps and periodicity of the optimal set of beams and the complementary set of beams in a sector.
FIG. 3 shows a call flow among gNB and AI/ML engine for the example method according to the present disclosure.

### DETAILED DESCRIPTION

According to an example embodiment, an AI/ML-based method is proposed to determine the SSB beam directions. An example embodiment of the method includes three steps: Data-Collection, Training/Optimization and Deployment.
*1) Data-Collection*: For *T_{data}* unit of time, gNBs collect UE-specific beam (e.g., P2 Beams, Grid-of-Beams, Non-Grid-of-Beams) directions and the doppler-spread/coherence-time from the network. The doppler-spread can be measured using the Tracking Reference Signals (TRS). During the Data-Collection step, gNBs exhaustively sweep SSBs across the sectors. The number of SSB beams is set to *Lₘₐₓ* based on the CC. The SSB beam directions are uniformly placed. For example, to cover a sector ranging from -60° to 60° with a CC ≤ 3 GHz, the number of SSB beams is to be set to 4 and the beam directions are to be set as -45°, -15°, 15° and 45°.

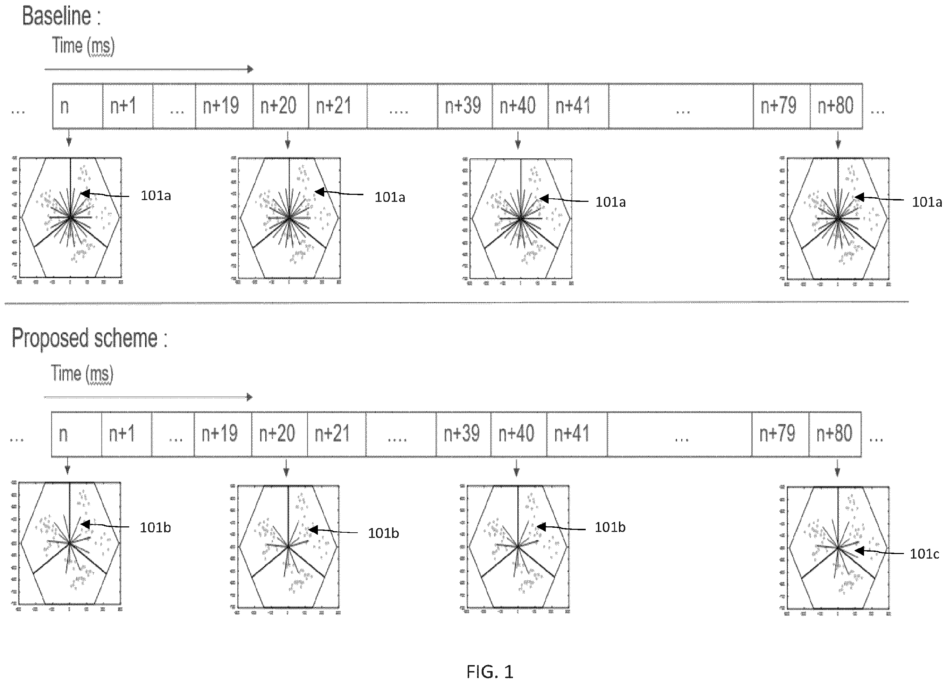

FIG. 1 shows a comparison between the baseline conventional scheme and the proposed example method. In the baseline conventional scheme 1001 shown on the upper half of FIG. 1, the gNB exhaustively sweeps a large number of SSB beams 101a at every 20ms. In the proposed example method shown in the bottom half of FIG. 1, the gNB sweeps only a few SSB beams 101b pointing towards the optimal directions. Specifically, the gNB sweeps in the optimal beam directions at every 20ms. In order to cover the outliers, one or a few more beam directions are added at every 80ms, as referenced by 101c.

*2) Model Training*/*Optimization*: Based on the UE-specific beam direction history obtained from gNBs, the AI/ML engine running at a centralized controller determines the optimal number of SSB beams and their directions of each gNB by executing the following algorithm.

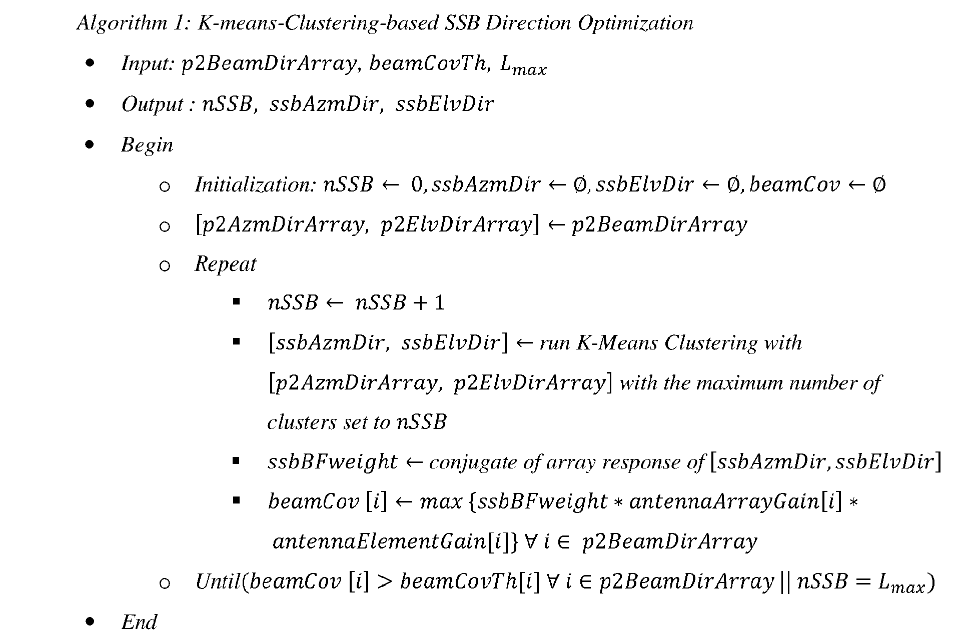

As can be seen from above, the example method takes the input as the *p*2*BeamDirArray* (i.e., history of the UE-specific beam directions), *beamCovTh* (i.e., minimum SSB beam gain to achieve in the desired angular range) and *Lₘₐₓ* (i.e., the maximum number of SSB beams depending on CC, as per 3GPP). Now, in each iteration, *nSSB* (i.e., the number of SSB beams) is increased by 1. Then, the K-means Clustering is performed with the UE-specific beam directions by setting the maximum number of clusters to *nSSB.* The outcome of K-means Clustering is saved in *ssbAzmDir* and *ssbElvDir* (i.e., the azimuth and elevation direction of the SSB beams). After that, *beamCov* (i.e., the beam gain achieved from the SSB beams at the individual directions of the UE-specific beam directions history) is computed. In this way, the iteration continues until the *beamCov* is greater than or equal to the *beamCovTh* for all the directions in the UE-specific beam directions history, or the number of SSB beams reaches the maximum limit. For a UE-specific beam direction, *beamCovTh* can be set based on the beam coverage obtained in that direction with the exhaustive sweep.

In addition to the optimal set of beam directions, a complementary set of the optimal set is also computed. The complementary set can be computed as follows. Consider the total set of P2 beam directions of a sector is Ψ, and the set of P2 beam directions history obtained from the Data-Collection step is Ψ*. Then, the set of P2 beam directions that are not covered by the optimal SSB beam set is Ψ^{c} = Ψ\Ψ*. Now, the complementary set of SSB beam directions are computed following the similar steps of Algorithm 1 with the inputs as Ψ^{c} instead of Ψ*.

After that, the periodicity for the optimal set of beams is determined from the doppler-spread/coherence-time history obtained during the Data-Collection step. The mapping between the doppler-spread/coherence-time history to SSB periodicity can be done in various ways. An example is given in the followings. First, the values from the periodicity set of {5,10, 20, 40, 80, 160} ms that are greater than the mean coherence-time are selected and stored in a set (say, *T'*). Then, the smallest value from *T'* is selected as the periodicity of Optimal sweep and the highest value from *T'* is selected as the periodicity of Full sweep (Optimal + Complementary beams).

Note that the coherence-time (i.e., in µs) is usually much smaller than the SSB periodicity choices (i.e., in ms). Therefore, a constant scaling factor can be multiplied to the coherence-time while determining the SSB periodicity. Furthermore, the Complementary beams and the Optimal beams have different periodicity. This will arise conflict for the SS-RSRP measurement at UEs. To avoid the conflict, the bitmaps for the Optimal sweep and the Full sweep need to be designed accordingly. The bitmap of the Full sweep shall consist of '1's in the Optimal and Complementary directions. The bitmap of the Optimal sweep shall consist of '1's at the Optimal directions and '0's for all the remaining directions. Finally, the CU shares the SSB configuration (directions and periodicity) with gNBs.

*3)Deployment:* After receiving the new SSB configuration (directions and periodicity) from the AI/ML engine (running at CU), each gNB first updates the Bitmap and Periodicity field of the SIBlmessage (before deploying the new SSB configuration) as described below. The Bitmap field shall consist of '1's at the Optimal and the Complementary choices and '0's at all the remaining choices as per the new configuration. The gNBs broadcast the SIB1 message using the existing Physical Downlink Control Channel (PDCCH) and Physical Downlink Shared Channel (PDSCH) resources with the existing SSB beamforming weights. Upon receiving the SIB1 message from the serving gNBs, Radio Resource Control (RRC)-Connected/Inactive UEs update their SSB receiving bitmap and periodicity configuration. In that way, UEs shall expect to receive SSBs only in the Optimal and the Complementary directions as per the new configuration in the next SSB transmission opportunity.

Furthermore, the gNBs also configures 2 SIB1 messages: a) SIB1 message for the Optimal set of beams and b) SIB1 message for the Complementary set of beams, before deploying the new SSB configuration. The SIB1 message of the Optimal beam shall reflect the optimal choices in the Bitmap field (by putting '1's at the Optimal directions and '0's for all the remaining directions). The SIB1 message of the Complementary beam shall reflect all the choices in the Bitmap field (by putting `1's at the Optimal directions and the Complementary directions and '0's for all the remaining directions). The SIB1 messages should also reflect the respective periodicity.

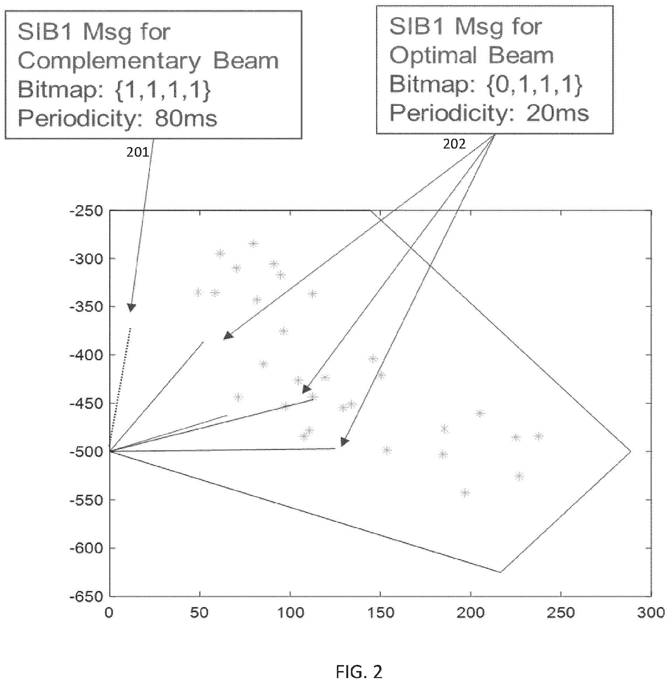

FIG. 2 shows an example of bitmaps and periodicity of the optimal set of beams (as referenced by 201) and the complementary set of beams (as referenced by 202) in a sector. Note that the complementary beams and the optimal beams have different periodicity. This will cause a conflict for the SS-RSRP measurement at UEs. To avoid the conflict, the bitmaps are designed accordingly. Since the bitmap of the optimal set of beams are set as {0,1,1,1 }, UEs connected to the optimal beams will measure SS-RSRP only from the optimal beams at every 20ms. If there is any outlier UE, it will be connected to a complementary beam and measure the SS-RSRP from the full set at every 80ms.

An example of SIB 1 messages for Optimal beam and the Complementary beams is given below (as per the number of beams shown in FIG. 2):
a) SIB 1-Optimal-Beam 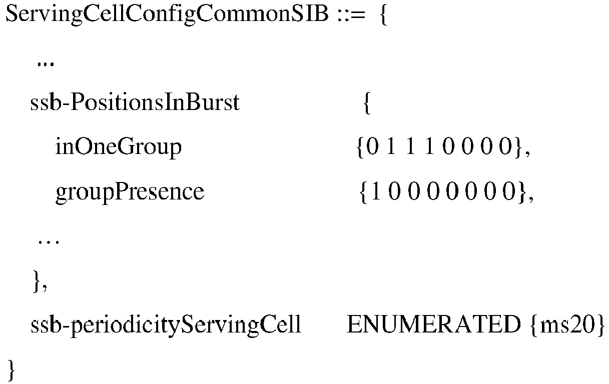
b) SIB1-Complemetray-Beam

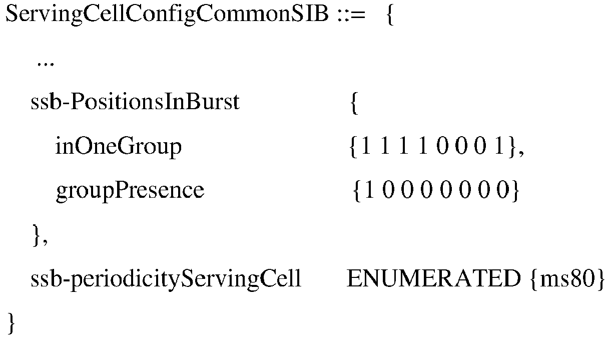

In the next SSB transmission opportunity (as per the periodicity of the pervious configuration), the gNB transmits SSBs in the Optimal as well as the Complementary directions. UEs select Optimal or Complementary beams based on RSRP and update their SSB receiving configuration (bitmap and periodicity) as per the SIB1 messages. In this way, the UEs connected to the Optimal beams would search for only the Optimal beams at every *t*₁ ms and the UEs connected to the Complementary beams would search for the Optimal and Complementary beams at every *t*₂ ms.

In the following SSB transmission opportunities (as per the periodicity of the new configuration), the gNB transmits SSBs in only the Optimal directions or, both of the Optimal and the Complementary set of directions as per the respective periodicity. In this way, the changes made in the SSB configuration remain transparent to UEs.

Note that along with deploying the new SSB configurations, the gNBs keep collecting the data (i.e., UE-specific beam directions and doppler-spread history) and share the data at every *T_{data}* unit of time with the AI/ML engine. The AI/ML engine updates the SSB configurations based on the weighted average of the current data and the past data.

After the deployment of the new configuration, KPIs (e.g., Mobility, Integrity etc. and specifically, IA performance e.g., network SS-RSRP, network wideband throughput) should be monitored via minimized drive test (MDT) bits of the UEs. If any significant drop in KPIs is observed, the fallback setup (i.e., exhaustive sweep) should be deployed and the AI/ML engine should re-train the model.

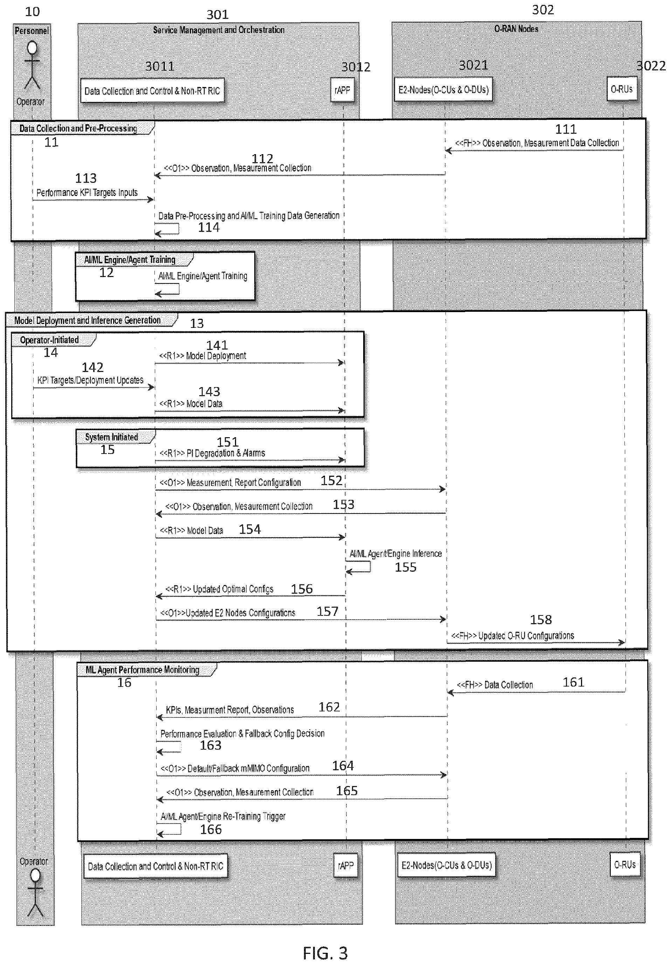

The full call flow among gNB and AI/ML engine for the example method according to the present disclosure is shown in FIG. 3. As shown in FIG. 3, the network components involved in the example method include: Service Management and Orchestration (SMO) module 301, which in turn encompasses a module 3011 for data collection/control and Non-Real Time Radio Intelligent Controller (Non-RT RIC) and a module 3012 for rAPP; Open Radio Access Network (O-RAN) nodes 302, which include E2 node(s) 3021 (i.e., O-RAN Centralized Units (O-CUs) and/or O-RAN Distributed Units (O-DUs); for the sake of simplicity, 3021 references a collective entity encompassing O-CUs and/or O-DUs) and O-RAN Radio Units (O-RUs) 3022. Also shown in FIG. 3 is a network operator 101, which can interact with the module 3011 for data collection/control and Non-RT RIC. As referenced by 111, the O-RU 3022 sends observation and measurement data to the E2 Node 3021, which in turn forwards (as referenced by 112) the observation and measurement data to the module 3011 for data collection/control and Non-RT RIC. In addition, key performance indicators (KPIs) targets are forwarded (as referenced by 113) from the network operator 10 to the module 3011 for data collection/control and Non-RT RIC. Next, as referenced by 114, the module 3011 for data collection/control and Non-RT RIC performs data pre-processing and artificial intelligence and/or machine learning (AI/ML) training data generation. The module 3011 for data collection/control and Non-RT RIC uses the AI/ML training data to perform AI/ML engine and/or agent training, as referenced by 12.

Continuing with FIG. 3, model deployment and inference generation block 13 will be described. In the operator-initiated segment (as referenced by block 14), model deployment (as referenced by 141) is implemented from the module 3011 for data collection/control and Non-RT RIC to the rAPP 3012. In addition, as referenced by 142, KPI targets and/or deployment updates are forwarded from the network operator 10 to the module 3011 for data collection/control and Non-RT RIC, which module 3011 in turn forwards (as referenced by 143) model data to the rAPP 3012. In the system-initiated segment (as referenced by block 15), the module 3011 for data collection/control and Non-RT RIC notifies (as referenced by 151) performance indicator (PI) degradation and alarms to the rAPP 3012. Subsequently, the module 3011 for data collection/control and Non-RT RIC forwards (as referenced by 152) measurement report configuration to the E2 Node 3021, which in turn sends observation and measurement data (as referenced by 153) to the module 3011 for data collection/control and Non-RT RIC. Next, the module 3011 for data collection/control and Non-RT RIC forwards (as referenced by 154) model data to the rAPP 3012, which in turn implements (as referenced by 155) AI/ML agent/engine inference derivation. Based on the inference, the rAPP 3012 forwards (as referenced by 156) updated optimal configurations to the module 3011 for data collection/control and Non-RT RIC, which in turn sends (as referenced by 157) updated E2 nodes configurations to the E2 nodes 3021. Subsequently, the E2 node(s) 3021 send (as referenced by 158) updated O-RU configurations to the O-RU(s) 3022.

In this section, ML agent performance monitoring block 16 of FIG. 3 will be described. As shown by 161, O-RUs 3022 send various data (e.g., performance and/or measurement data, as well as observations) to the E2 nodes 3021, which in turn sends (as referenced by 162) KPIs, measurement report and/or observations to the module 3011 for data collection/control and Non-RT RIC. The module 3011 for data collection/control and Non-RT RIC implements (as referenced by 163) performance evaluation and fallback configuration decision, and subsequently sends (as referenced by 164) default and/or fallback massive multiple-input multiple-output (mMIMO) configuration to the E2 nodes 3021. The E2 nodes send (as referenced by 165) observations and/or measurement data to the module 3011 for data collection/control and Non-RT RIC. Subsequently, as referenced by 166, AI/ML agent/engine retraining is implemented by the module 3011 for data collection/control and Non-RT RIC.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A method for optimizing Synchronization Signal Block (SSB) sweep by a gNodeB in a 5G wireless system, the method comprising the steps of:
sweeping, by a gNB, SSBs and collecting a user equipment (UE)-specific beam direction history;
determining, by at least one of an artificial intelligence (AI) and machine learning (ML) engine, an optimal number of SSB beams and optimal set of beam directions based on at least the UE-specific beam direction history, and a complementary set of beam directions for the optimal set of beam directions;
transmitting, by the at least one of the AI and ML engine, both the optimal set of beam directions and the complementary set of beam directions to the gNB; and
transmitting, by the gNB, i) at every *t*₁ milliseconds (ms), SSBs in the optimal beam directions, and ii) at every *t*₂ ms, SSBs in the optimal set of beam directions as well as the complementary set of beam directions, wherein *t*₂ > *t*₁ and *t*₁, *t*₂ ∈ {5, 10, 20, 40, 80, 160} *ms.*

2. The method according to claim 1, wherein the determining step comprises performing K-means Clustering per gNB basis.

3. The method according to claim 2, further comprising:
periodically updating, by the at least one of the AI and ML engine, SSB configurations comprising beam directions and periodicity, based on weighted average of latest data and previous data.

4. The method according to claim 2, wherein the determining the optimal number of SSB beams comprises a plurality of iterations of the following steps:
i) in each iteration, increasing nSSB representing the number of SSB beams by 1;
ii) performing the K-means Clustering with beam directions from the UE-specific beam directions history by setting the maximum number of clusters to nSSB;
iii) storing the result of the K-means Clustering including the azimuth direction and the elevation direction of the SSB beams; and
iv) computing *beamCov* representing beam gain achieved from the SSB beams at the individual directions of the UE-specific beam directions history.

5. The method according to claim 4, wherein the iterations of the steps for determining the optimal number of SSB beams are repeated until one of i) the *beamCov* is greater than or equal to the *beamCovTh* representing a specified minimum SSB beam gain to be achieve in a desired angular range for all the directions in the UE-specific beam directions history, or ii) the number of SSB beams reaches a specified maximum limit.

6. The method according to claim 4, wherein the periodicity of *t*₁ milliseconds for transmitting the SSBs in the optimal beam directions is determined from at least one of previously obtained doppler-spread and coherence-time history.

7. The method according to claim 6, wherein the periodicity of *t*₁ milliseconds for transmitting the SSBs in the optimal set of beam directions is determined as follows:
i) selecting values from the periodicity set of {5,10, 20, 40, 80, 160} ms that exceed the mean coherence-time of the coherence-time history; and
ii) specifying the smallest value among the selected values exceeding the mean coherence-time as the periodicity of *t*₁ milliseconds for transmitting the SSBs in the optimal set of beam directions.

8. The method according to claim 6, wherein the periodicity of *t*₂ milliseconds for transmitting the SSBs in the optimal set of beam directions as well as in the complementary set of beam directions is determined from the at least one of the previously obtained doppler-spread and coherence-time history, and wherein the periodicity of *t*₂ milliseconds for transmitting the SSBs in the optimal set of beam directions as well as in the complementary set of beam directions is determined as follows:
i) selecting values from the periodicity set of {5,10, 20, 40, 80, 160} ms that exceed the mean coherence-time of the coherence-time history; and
ii) specifying the largest value among the selected values exceeding the mean coherence-time as the periodicity of *t*₂ milliseconds for transmitting the SSBs in the optimal set of beam directions as well as in the complementary set of beam directions.

9. The method according to claim 6, wherein the periodicity of *t*₁ milliseconds for transmitting the SSBs in the optimal set of beam directions and the periodicity of *t*₂ milliseconds for transmitting the SSBs in the optimal set of beam directions as well as in the complementary set of beam directions are determined as follows:
i) selecting values from the periodicity set of {5,10, 20, 40, 80, 160} ms that exceed the mean coherence-time of the coherence-time history;
ii) specifying the smallest value among the selected values exceeding the mean coherence-time as the periodicity of *t*₁ milliseconds for transmitting the SSBs in the optimal set of beam directions; and
iii) specifying the largest value among the selected values exceeding the mean coherence-time as the periodicity of *t*₂ milliseconds for transmitting the SSBs in the optimal set of beam directions as well as in the complementary set of beam directions.

10. The method according to claim 3, wherein the determining the optimal number of SSB beams comprises a plurality of iterations of the following steps:
i) in each iteration, increasing nSSB representing the number of SSB beams by 1;
ii) performing the K-means Clustering with beam directions from the UE-specific beam directions history by setting the maximum number of clusters to nSSB;
iii) storing the result of the K-means Clustering including the azimuth direction and the elevation direction of the SSB beams; and
iv) computing *beamCov* representing beam gain achieved from the SSB beams at the individual directions of the UE-specific beam directions history.

11. The method according to claim 10, wherein the iterations of the steps for determining the optimal number of SSB beams are repeated until one of i) the *beamCov* is greater than or equal to the *beamCovTh* representing a specified minimum SSB beam gain to be achieve in a desired angular range for all the directions in the UE-specific beam directions history, or ii) the number of SSB beams reaches a specified maximum limit.

12. The method according to claim 10, wherein the periodicity of *t*₁ milliseconds for transmitting the SSBs in the optimal beam directions is determined from at least one of previously obtained doppler-spread and coherence-time history.

13. The method according to claim 12, wherein the periodicity of *t*₁ milliseconds for transmitting the SSBs in the optimal set of beam directions is determined as follows:
i) selecting values from the periodicity set of {5,10, 20, 40, 80, 160} ms that exceed the mean coherence-time of the coherence-time history; and
ii) specifying the smallest value among the selected values exceeding the mean coherence-time as the periodicity of *t*₁ milliseconds for transmitting the SSBs in the optimal set of beam directions.

14. The method according to claim 12, wherein the periodicity of *t*₂ milliseconds for transmitting the SSBs in the optimal set of beam directions as well as in the complementary set of beam directions is determined from the at least one of the previously obtained doppler-spread and coherence-time history, and wherein the periodicity of *t*₂ milliseconds for transmitting the SSBs in the optimal set of beam directions as well as in the complementary set of beam directions is determined as follows:
i) selecting values from the periodicity set of {5,10, 20, 40, 80, 160} ms that exceed the mean coherence-time of the coherence-time history; and
ii) specifying the largest value among the selected values exceeding the mean coherence-time as the periodicity of *t*₂ milliseconds for transmitting the SSBs in the optimal set of beam directions as well as in the complementary set of beam directions.

15. The method according to claim 12, wherein the periodicity of *t*₂ milliseconds for transmitting the SSBs in the optimal set of beam directions as well as in the complementary set of beam directions is determined from the at least one of the previously obtained doppler-spread and coherence-time history, and wherein the periodicity of *t*₁ milliseconds for transmitting the SSBs in the optimal set of beam directions and the periodicity of *t*₂ milliseconds for transmitting the SSBs in the optimal set of beam directions as well as in the complementary set of beam directions are determined as follows:
i) selecting values from the periodicity set of {5,10, 20, 40, 80, 160} ms that exceed the mean coherence-time of the coherence-time history;
ii) specifying the smallest value among the selected values exceeding the mean coherence-time as the periodicity of *t*₁ milliseconds for transmitting the SSBs in the optimal set of beam directions; and
iii) specifying the largest value among the selected values exceeding the mean coherence-time as the periodicity of *t*₂ milliseconds for transmitting the SSBs in the optimal set of beam directions as well as in the complementary set of beam directions.
